# FASCICULE DE BREVET EUROPEEN

(11) **EP 0 454 531 B1**
(45) Date de publication et mention de la délivrance du brevet: **21.01.1998**
(21) Numéro de dépôt: 91400987.3
(22) Date de dépôt: 15.04.1991
(51) Int. Cl.: C01B 21/04

(54) **Procédé et dispositif d'élaboration d'azote ultra-pur**
Verfahren und Einrichtung zur Herstellung von ultrareinem Stickstoff
Process and apparatus for the preparation of ultra-pure nitrogen

(30) Priorité: 20.04.1990 FR 9005065; 22.10.1990 FR 9013039
(43) Date de publication de la demande: 30.10.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Louise, Jean, F-94800 Villejuif (FR); Mollaret, Bertrand, F-78220 Viroflay (FR); Thonnelier, Jean-Yves, F-78960 Voisins le Bretonneux (FR); Gary, Daniel, F-78180 Montigny le Bretonneux (FR)
(74) Mandataire: Le Moenner, Gabriel

(56) Documents cités:
- FR-A- 1 475 657
- US-A- 4 579 723
- US-A- 4 869 883
- US-A- 4 917 711
- CHEMICAL ABSTRACTS, vol. 111, no. 18, octobre 1989 Columbus, Ohio, USA V.I. Fainshtein et al.: "Purification of technical-grade gases for use in the manufacture of optical fibers." page 186; ref. no. 156875 K
- CHEMICAL ABSTRACTS, vol. 107, no. 20, novembre 1987 Columbus, Ohio, USA D. Chen et al.: "Equipment and process for producing superpure nitrogen from common nitrogen." page 202; ref. no. 179402 K
- CHEMICAL ABSTRACTS, vol. 107, no. 20, novembre 1987 Columbus, Ohio, USA Y. Chen et al: "Catalyst for removal of hydrogen and oxygen from inert gases." page 211; ref. no. 179530 A

## Description

La présente invention concerne l'élaboration d'azote ultra-pur, à teneur en impuretés résiduelles (essentiellement CO, H₂, CO₂, H₂ et O₂) inférieure à quelques dizaines de ppb (parties par milliard), généralement à moins de 10 ppb, et, même encore moins, de l'ordre de 1 ppb.

L'azote pur est en général obtenu par distillation cryogénique de l'air, ce qui permet de séparer l'oxygène en quasi totalité, alors que le gaz carbonique et la vapeur d'eau ont été préalablement éliminés par arrêt sur absorbant avant distillation.

Cependant, le monoxyde de carbone (CO) et l'hydrogène (H₂) contenus dans l'air se retrouvent après distillation dans l'azote, sauf à prévoir, pour ce qui concerne l'hydrogène, l'adjonction d'une colonne de distillation supplémentaire, ce qui se révèle particulièrement onéreux.

C'est la raison pour laquelle, actuellement, on procède à un prétraitement de l'air, après compression et avant envoi vers le dispositif de dessiccation-décarbonatation, par voie catalytique mettant en oeuvre des métaux nobles tels le platine et le palladium sur support d'alumine et à une température élevée, supérieure à 100°C ou, pour le monoxyde de carbone, de l'oxyde de cuivre CuO à une température de l'ordre de 150°C, après quoi, l'air ainsi purifié peut être envoyé vers la colonne de distillation, mais cette opération à température élevée s'effectuant sur tout le débit d'air est également coûteuse et l'on parvient difficilement à la limite visée de 10 ppb, à la fois pour le monoxyde de carbone et pour l'hydrogène, dont les teneurs résiduelles restent de l'ordre de 100 ppb.

On a proposé, dans le document U.S.-A-4.869.883, d'utiliser des épurateurs qui traitent à température élevée l'azote pour en éliminer CO, CO₂, H₂O, O₂, H₂, qui fonctionnent par élimination de l'oxygène par réaction avec CO et/ou H₂ sur Cu avec formation de CO₂ et/ou H₂O, par élimination de CO et/ou H₂ sur CuO, puis élimination de CO₂ et H₂O sur tamis moléculaires, le cas échéant précédé d'un lit d'alumine. De tels épurateurs sont de fonctionnement relativement complexe et, notamment, nécessitent un grand nombre de conteneurs sous pression à haute température. Un procédé du même type fonctionnant à température ambiante sur catalyseur à base de Nickel (NiO et Ni avec environ 50 % en poids de Ni avec au moins 5 % en poids de Ni sous forme Ni métal) est décrit dans le document E.P.-A-240.270, qui permet de réduire le taux d'impuretés jusqu'au dessous de 100 ppb. Il présente l'inconvénient de nécessiter une régénération en mettant en oeuvre un gaz contenant de l'hydrogène. D'une façon générale, on a déjà bien tenté d'arrêter CO et H₂ par adsorption, mais les adsorbants ou tamis classiques sont inopérants pour H₂ et peu efficaces pour CO. Par exemple, le tamis moléculaire 13X arrête CO₂ mais très peu CO. On sait cependant que l'efficacité de ces produits adsorbants peut être améliorée par échange d'ions cuivre (Cu) ou imprégnation de palladium (Pd), mais aucune proposition n'a encore été faite pour adapter cette technique à l'élaboration d'azote ultra-pur.

US 4 917 711 propose des adsorbants constitués d'un support, tel que l'alumine, un gel de silice ou une zéolithe sur lequel a été disposé un composé du cuivre. Ces adsorbants permettent la purification de mélanges gazeux par élimination du monoxyde de carbone par adsorption.

US 4 579 723 décrit un procédé de purification d'un gaz inerte utilisant la combinaison de deux lits catalytiques respectivement constitués d'éléments métalliques déposés sur un support de type alumine. Ce procédé permet l'élimination des impuretés H₂ et CO.

FR 1 475 657 concerne un procédé pour l'élimination d'hydrogène et/ou d'oxygène de mélanges gazeux par formation de H₂O. Le procédé en question met en oeuvre un catalyseur constitué de métaux déposés sur un oxyde réfractaire métallique hautement activé (tel que la zircone, l'alumine-α, TiO₂ et la silice) pouvant être chauffé jusqu'à des températures de 1100°C.

Chem. Abst. III : 156875k décrit un procédé d'oxydation de l'hydrogène contenu dans un gaz tel que O₂, N₂ et l'argon par oxydation en H₂O en présence de Pd-Al₂O₃ comme catalyseur, et d'oxygène. Pour l'élimination de H₂O, ce document préconise lors d'une deuxième étape l'utilisation d'une zéolithe.

US 4 869 983 propose un procédé d'élimination de CO et de H₂ par oxydation en H₂O et CO₂ en présence d'un catalyseur à base de cuivre, à une température comprise entre 150 et 250°C. On notera que ce document ne donne aucune indication quant à la nature du support utilisé.

Chem. Abstr. 107, n° 179402k enseigne l'élimination de O₂ d'un mélange gazeux enrichi en azote en présence d'un catalyseur à base de platine et/ou de palladium.

Chem. Abstr. 107, n° 179530a décrit un procédé d'élimination de O₂ et de H₂ d'un gaz inerte par utilisation d'un catalyseur à base de Pd-CuOx supporté sur TiO₂.

La présente invention a pour objet un procédé simple, efficace et peu onéreux d'élaboration d'azote ultra-pur atteignant le double objectif suivant:
- un seuil d'arrêt très bas, de l'ordre de 10 ppb,
- avec un rapport quantité de gaz à traiter/quantité de produit d'arrêt permettant une mise en oeuvre à coûts réduits.

Plus précisément, l'invention concerne un procédé de préparation d'azote de haute pureté à partir d'air à distiller, caractérisé en ce que
- l'on élimine la vapeur d'eau et le dioxyde de carbone de l'air à distiller par passage de l'air sur un lit d'adsorbant, puis
- l'on fait passer l'air à distiller au contact d'un lit de particules à une température comprise entre 0 et 50°C en vue d'éliminer les impuretés monoxyde de carbone et hydrogène de l'air à distiller, ledit lit de particules comprenant un support particulaire zéolithique à forte surface spécifique supportant des particules d'au moins un élément métallique choisi dans le groupe constitué par le ruthénium, le rhodium, le palladium, l'osmium, l'iridium et le platine, puis l'on sépare l'azote de haute pureté dudit air par distillation cryogénique.

Par "élément métallique", on entend dans le cadre de la présente invention, aussi bien des particules de métal à l'état réduit qu'une espèce ionique.

On préfère que l'élément métallique soit le palladium.

Les gaz à épurer présentent habituellement avant leur traitement selon le procédé de l'invention, moins de 40 ppm plus généralement moins de 10 ppm de monoxyde de carbone et des teneurs équivalentes en hydrogène.

La préparation initiale du support particulaire d'éléments métalliques utilisé par l'invention s'effectue en trois étapes, à savoir :
- une opération de prétraitement du support particulaire ;
- une mise en contact d'une solution contenant un précurseur de l'élément métallique avec le support particulaire ;
- un séchage progressif, de préférence sous balayage d'un gaz neutre tel l'azote ;

La mise en contact s'effectue soit avec un excès de solution, qui est ensuite séparée du support particulaire après un certain temps de contact (technique d'échange d'ions), soit avec une quantité de solution égale à ce que le support particulaire peut absorber (technique d'imprégnation). De préférence, ladite solution est une solution aqueuse.

Si l'on veut obtenir l'élément métallique sous forme de particules de métal à l'état réduit, on peut procéder à une quatrième étape, de réduction, par exemple au moyen d'un gaz contenant de l'hydrogène, à température élevée.

De façon générale, un poids de l'élément métallique actif rapporté au poids total du support particulaire compris entre 0,1 % et 5 % est suffisant.

Selon les cas, l'opération d'élimination des impuretés CO et/ou H₂ s'effectue soit à température voisine de la température ambiante, entre 0°C et 50°C, le cas échéant jusqu'à -30°C, soit à température élevée supérieure à 100°C.

Il est possible de procéder à l'épuration finale d'azote de distillation cryogénique de l'air, en éliminant les impuretés CO et hydrogène par passage de l'azote de distillation à température voisine de la température ambiante entre 0°C et 50°C sur un lit constitué de particules d'au moins un élément métallique choisi parmi le ruthénium (Ru) et/ou le rhodium (Rh) et/ou le palladium (Pd) et/ou l'osmium (Os) et/ou l'iridium (Ir) et/ou le platine(Pt).

L'invention s'applique à l'épuration d'air préalablement à sa distillation par passage, après élimination par adsorption dans un dessiccateur-décarbonateur d'au moins la vapeur d'eau, à température voisine de la température ambiante entre 0°C et 50°C, de l'air à distiller sur un lit constitué de particules d'au moins un élément métallique choisi parmi le ruthénium (Ru) et/ou le rhodium (Rh) et/ou le palladium (Pd) et/ou l'osmium (Os) et/ou l'iridium (Ir) et/ou le platine (Pt) pour l'arrêt du monoxyde de carbone, et de l'hydrogène, supportées sur support particulaire zéolithique.

En variante, on traite l'air à distiller à température élevée de l'ordre de 100°C à 300°C au travers d'un lit unique de particules d'au moins un élément métallique choisi parmi le ruthénium (Ru) et/ou le rhodium (Rh) et/ou le palladium (Pd) et/ou l'osmium (Os) et/ou l'iridium (Ir) et/ou le platine (Pt) supportées sur support particulaire zéolithique. En variante, on procède d'abord à une dessiccation principale, puis au traitement à température élevée sur de tels lits de particules d'au moins un élément métallique choisi parmi le ruthénium (Ru) et/ou le rhodium (Rh) et/ou le palladium (Pd) et/ou l'osmium (Os) et/ou l'iridium (Ir) et/ou le platine (Pt) supportées sur support particulaire zéolithique, puis à une dessiccation-décarbonatation complémentaire finale.

Il s'est avéré cependant particulièrement avantageux de régénérer le lit constitué de particules d'au moins un élément métallique choisi parmi le ruthénium (Ru) et/ou le rhodium (Rh) et/ou palladium (Pd) et/ou l'osmium (Os) et/ou l'iridium (Ir) et/ou le platine (Pt), supportées sur support particulaire, avec un gaz, notamment avec de l'azote, notamment celui issu de la distillation, à une température supérieure à 100°C.

Dans les formes de mise en oeuvre opérant à température voisine de la température ambiante sur l'air a distiller, le dispositif d'élaboration d'azote ultra-pur comprend au moins un lit d'arrêt d'hydrogène et de monoxyde de carbone disposé en une enceinte unique, l'opération s'effectuant au moyen de deux enceintes identiques, l'une opérant à température ambiante pour l'épuration, tandis que l'autre est en régénération, sous l'effet d'une montée en température et/ou d'un abaissement de pression, le cas échéant en dessous de la pression atmosphérique, et/ou d'un balayage d'élution par le gaz à épurer ou épuré et/ou de l'air enrichi en oxygène.

L'invention concerne par ailleurs un dispositif pour préparer de l'azote de haute pureté, caractérisé en ce qu'il comprend un lit d'adsorbant pour l'arrêt de la vapeur d'eau et du dioxyde de carbone, un lit constitué des particules d'au moins un élément métallique choisi dans le groupe constitué par le ruthénium, le rhodium, le palladium, l'osmium, l'iridium et le platine, lesdites particules étant supportées sur un support particulaire zéolithique à forte surface spécifique, ledit lit étant agencé dans deux enceintes, ainsi que des moyens pour faire passer alternativement l'air à distiller à travers le lit de l'une de ces enceintes tandis que l'autre lit est en régénération, et des moyens pour distiller l'air duquel au moins l'une des impuretés hydrogène et monoxyde de carbone a été éliminée.

De préférence, ce dispositif comprend en outre des lits pour l'arrêt final des traces de vapeur d'eau et de dioxyde de carbone, ces lits étant disposés en aval desdits lits de particules.

Dans la forme de mise en oeuvre opérant directement sur l'air, et à température voisine de la température ambiante, l'invention concerne un dispositif épurateur de l'air destiné à être distillé, avec des lits à support particulaire d'arrêt d'hydrogène et de monoxyde de carbone groupés avec les lits d'adsorbant destinés à l'arrêt de la vapeur d'eau (tel l'alumine) et de tamis moléculaire (tel la zéolithe 13X) pour l'arrêt du gaz carbonique, de la vapeur d'eau et autres polluants, en une enceinte unique d'arrêt. De préférence, les lits à support particulaire d'arrêt de l'hydrogène et du monoxyde de carbone sont disposés en aval d'au moins le lit d'arrêt de la vapeur d'eau, et, en outre, l'enceinte d'arrêt comporte, de préférence en aval des lits d'arrêt d'H₂ et de CO, des lits additionnels pour l'arrêt final de traces de vapeur d'eau et de gaz carbonique.

Un procédé d'élaboration d'azote ultra-pur du type mentionné plus haut, du genre où l'azote de distillation comporte en outre l'impureté oxygène (O₂), prêvoit d'associer à l'élimination de CO et/ou H₂ décrite plus haut, une élimination de l'impureté résiduelle O2. On fait alors en sorte qu'avant l'épuration finale, l'azote de distillation contienne un nombre de moles de (CO + H₂), le cas échéant par adjonction des dits gaz, supérieur au double du nombre de moles de l'impureté oxygène (O₂). Le lit constitué de particules d'au moins un élément métallique, choisi parmi le ruthénium (Ru) et/ou le rhodium (Rh) et/ou le palladium (Pd) et/ou l'osmium (Os) et/ou l'iridium (Ir) et/ou le platine (Pt), supportées sur un support particulaire, agit comme un catalyseur ce qui permet l'élimination totale de O2, par action réductrice de CO et/ou H2, avec formation respectivement de CO2 et/ou H2O. Les impuretés CO et/ou H2 n'ayant pas réagi avec O2 sont éliminées par passage sur le lit de particules d'éléments métalliques.

L'invention est maintenant illustrée par les exemples de mise en oeuvre suivants, qui mettent en évidence certains résultats conformes à l'invention et d'autres inopérants :
- Résultats : (les Ncm³ expriment le volume en cm³ à 0°C et à une atmosphère)
- Sur azote à température ambiante :
- Exemple comparatif 1 :
   - . tamis échangé Cu: : pas d'arrêt de H₂
   arrêt du CO : < 2 ppb
   : taux d'adsorption au perçage
   = 0,42 Ncm³/g (Ncm³ de CO par gramme d'adsorbant)
- Exemple 1 :
   - . tamis imprégné Pd: : CO = 15 ppb
   : H₂ < 10 ppb
   : taux d'adsorption au perçage = 0,27 Ncm³/g (Ncm³ de CO et de H₂ par gramme d'adsorbant)
- Exemple comparatif 2 :
   - . tamis échangé Cu +:
   - tamis imprégné Pd: : CO < 2 ppb
   H₂ < 3 ppb
   taux d'adsorption au perçage = 0,67 Ncm³/g (Ncm³ de CO et de H₂ par gramme d'adsorbant)

On a à la fois des seuils bas et des taux intéressants. La réversibilité a été montrée en renouvelant les essais.
- Sur de l'air à température ambiante :
- Exemple comparatif 3 :
   - . tamis échangé Cu: : pas d'arrêt de H₂
   : arrêt de CO : seuil = 6 ppb
   : taux d'adsorption au perçage = 0,16 Ncm³/g (Ncm³ de CO par gramme d'adsorbant)
- Exemple 2 :
   - . tamis imprégné Pd: : CO = 6 ppb
   : H₂ = 10 à 20 ppb pendant 10 jours
   : formation de CO₂ dans le réacteur qui est ensuite éliminé à température ambiante.

L'invention s'applique à l'élaboration d'azote ultra-pur, notamment utilisé dans l'industrie électronique.

## Revendications

1. Procédé de préparation d'azote de haute pureté à partir d'air a distiller, caractérisé en ce que:
- l'on élimine la vapeur d'eau et le dioxyde de carbone de l'air à distiller par passage de l'air sur un lit d'adsorbant, puis
- l'on fait passer l'air à distiller au contact d'un lit de particules à une température comprise entre 0 et 50°C en vue d'éliminer les impuretés monoxyde de carbone et hydrogène de l'air à distiller, ledit lit de particules comprenant un support particulaire zéolithique à forte surface spécifique supportant des particules d'au moins un élément métallique choisi dans le groupe constitué par le ruthénium, le rhodium, le palladium, l'osmium, l'iridium et le platine, puis l'on sépare l'azote de haute pureté dudit air par distillation cryogénique.

2. Procédé selon la revendication 1, caractérisé en ce que ledit élément métallique est le palladium.

3. Procédé selon l'une des revendications 1 à 2, caractérisé en ce qu'on élimine les traces de vapeur d'eau et le dioxyde de carbone de l'air à distiller après passage de cet air au contact dudit lit de particules.

4. Procédé selon la revendication 3, caractérisé en ce qu'on élimine la vapeur d'eau et le dioxyde de carbone par passage de l'air sur un lit d'adsorbant, ledit lit d'adsorbant et ledit lit de particules étant disposés en une enceinte unique.

5. Procédé selon l'une des revendications 1 à 4, caractérisé en ce qu'on régénère ledit lit de particules par passage à travers celui-ci d'un gaz, notamment de l'azote, à une température supérieure à 100°C.

6. Procédé selon la revendication 5, caractérisé en ce que le lit de particules est agencé en deux enceintes, le lit de l'une de ces enceintes étant utilisé pour éliminer l'hydrogène et le monoxyde de carbone de l'air à distiller pendant que le lit de l'autre enceinte est régénéré.

7. Procédé selon l'une des revendications 1 à 6, caractérisé en ce que le poids du lit d'éléments métalliques rapporté au poids total du support particulaire est compris entre 0,1 % et 5%.

8. Dispositif pour préparer de l'azote de haute pureté selon le procédé de l'une des revendications 1 à 7, caractérisé en ce qu'il comprend un lit d'adsorbant pour l'arrêt de la vapeur d'eau et du dioxyde de carbone, un lit constitué des particules d'au moins un élément métallique choisi dans le groupe constitué par le ruthénium, le rhodium, le palladium, l'osmium, l'iridium et le platine, lesdites particules étant supportées sur un support particulaire zéolithique à forte surface spécifique, ledit lit étant agencé dans deux enceintes, ainsi que des moyens pour faire passer alternativement l'air à distiller à travers le lit de l'une de ces enceintes tandis que l'autre lit est en régénération, et des moyens pour distiller l'air duquel au moins l'une des impuretés hydrogène et monoxyde de carbone a été éliminée.

9. Dispositif selon la revendication 8, caractérisé en ce qu'il comporte en outre des lits pour l'arrêt final des traces de vapeur d'eau et de dioxyde de carbone, ces lits étant disposés en aval desdits lits de particules.

## Claims

1. Process for preparing high purity nitrogen from air to be distilled, characterized in that :
- water vapour and carbon dioxide are removed from the air to be distilled by passing the air over an adsorbent bed and then
- the air to be distilled is passed in contact with a bed of particles at a temperature of between 0 and 50°C with a view to removing the impurities carbon monoxide and hydrogen from the air to be distilled, the said bed of particles comprising a particulate zeolite support with a high specific surface area supporting the particles of at least one metallic element selected from the group consisting of ruthenium, rhodium, palladium, osmium, iridium and platinum, and the high purity nitrogen is then separated from the said air by cryogenic distillation.

2. Process according to claim 1, characterized in that the said metallic element is palladium.

3. Process according to either of claims 1 or 2, characterized in that traces of water vapour and carbon dioxide are removed from the air to be distilled after this air has been passed in contact with the said bed of particles.

4. Process according to claim 3, characterized in that water vapour and carbon dioxide are removed by passing the air over a bed of adsorbent, the said bed of adsorbent and the said bed of particles being situated in a single chamber.

5. Process according to one of claims 1 to 4, characterized in that the said bed of particles is regenerated by passing a gas, in particular nitrogen, through it at a temperature above 100°C.

6. Process according to claim 5, characterized in that the bed of particles is disposed in two chambers, the bed of one of these chambers being used to remove hydrogen and carbon monoxide from the air to be distilled, while the bed of the other chamber is regenerated.

7. Process according to one of claims 1 to 6, characterized in that the weight of the bed of metallic elements in relation to the total weight of the particulate support is between 0.1 and 5 %.

8. Device for preparing high purity nitrogen according to the process of one of claims 1 to 7, characterized in that it comprises a bed of adsorbent for trapping water vapour and carbon dioxide, a bed consisting of particles of at least one metallic element selected from the group consisting of ruthenium, rhodium, palladium, osmium, iridium and platinum, the said particles being supported on a particulate zeolite support with a high specific surface area, the said bed being disposed in two chambers, as well as means for passing the air to be distilled alternately through the bed of one of these chambers while the other bed is being regenerated, and means for distilling air from which at least one of the impurities hydrogen and carbon monoxide has been removed.

9. Device according to claim 8, characterized in that it additionally comprises beds for trapping the last traces of water vapour and carbon dioxide, these beds being disposed downstream from the said beds of particles.

## Patentansprüche

1. Verfahren zur Herstellung von hochreinem Stickstoff aus zu destillierender Luft,
dadurch gekennzeichnet, daß
- Wasserdampf und Kohlendioxid aus der zu destillierenden Luft dadurch entfernt werden, daß man letztere über eine Adsorberschicht leitet, anschließend
- die zu destillierende Luft zum Entfernen ihrer Verunreinigungen Kohlenmonoxid und Wasserstoff in Kontakt mit einer Teilchenschicht bei einer Temperatur zwischen 0 und 50 °C bringt, wobei die Teilchenschicht einen Zeoltithteilchenträger mit sehr großer spezifischer Oberfläche aufweist, der Teilchen mit mindestens einem metallischen Element aus der aus Ruthenium, Rhodium, Palladium, Osmium, Iridium und Platin bestehenden Gruppe trägt, und dann hochreiner Stickstoff der Luft durch kryogene Destillation abgeschieden wird.

2. Verfahren nach Anspruch 1, dadurch gekennzeichnet, daß das metallische Element Palladium ist.

3. Verfahren nach Anspruch 1 oder 2, dadurch gekennzeichnet, daß in der zu destillierenden Luft vorliegende Wasserdampfspuren und Kohlendioxid entfernt werden, nachdem die Luft mit der Teilchenschicht in Kontakt gebracht wurde.

4. Verfahren nach Anspruch 3, dadurch gekennzeichnet, daß Wasserdampf und Kohlendioxid entfernt werden, indem die Luft über eine Adsorberschicht geleitet wird, wobei die Adsorberschicht und die Teilchenschicht in einem Gehäuse angeordnet sind.

5. Verfahren nach einem der Ansprüche 1 bis 4, dadurch gekennzeichnet, daß die Teilchenschicht mittels Hindurchleiten eines Gases, insbesondere Stickstoff, bei einer maximalen Temperatur von 100 °C regeneriert wird.

6. Verfahren nach Anspruch 5, dadurch gekennzeichnet, daß die Teilchenschicht in zwei Gehäusen angeordnet ist, wobei die Schicht in dem einen Gehäuse zum Entfernen von Wasserstoff und Kohlenmonoxid der zu destillierenden Luft verwendet wird, während die Schicht in dem anderen Gehäuse regeneriert wird.

7. Verfahren nach einem der Ansprüche 1 bis 6, dadurch gekennzeichnet, daß das Gewicht der Schicht aus metallischen Elementen 0.1 bis 5 % des Gesamtgewichts des Teilchenträgers beträgt.

8. Vorrichtung zur Herstellung von hochreinem Stickstoff nach dem Verfahren nach einem der Ansprüche 1 bis 7, dadurch gekennzeichnet, daß sie eine Adsorberschicht zum Zurückhalten von Wasserdampf und Kohlendioxid, eine aus Teilchen aus mindestens einem metallischen Element aus der aus Ruthenium, Rhodium, Palladium, Osmium, Iridium und Platin bestehenden Gruppe zusammengesetzte, in zwei Gehäusen angeordnete Schicht, sowie Mittel, um die zu destillierende Luft wahlweise durch die Schicht in einem der Gehäuse, während die andere Schicht regeneriert wird, strömen zu lassen, und Mittel zur Luftdestillation, wodurch mindestens eine der Verunreinigungen Wasserstoff und Kohlenmonoxid entfernt wird, umfaßt.

9. Vorrichtung nach Anspruch 8, dadurch gekennzeichnet, daß sie außerdem Schichten zum endgültigen Zurückhalten von Wasserdampf- und Kohlendioxidspuren umfaßt, wobei die Schichten stromab von den Teilchenschichten angeordnet sind.
